# EUROPÄISCHE PATENTSCHRIFT

(11) **EP 0 579 623 B1**
(45) Veröffentlichungstag und Bekanntmachung des Hinweises auf die Patenterteilung: **15.03.1995**
(21) Anmeldenummer: 92906671.0
(22) Anmeldetag: 16.03.1992
(51) Int. Cl.: B01D 53/00, B01D 53/22, B01D 53/14

(54) **VERFAHREN ZUM REINIGEN VON ABLUFT**
PROCESS FOR CLEANING EXHAUST AIR
PROCEDE D'EPURATION D'AIR D'ECHAPPEMENT

(30) Priorität: 25.03.1991 DE 4109732
(43) Veröffentlichungstag der Anmeldung: 26.01.1994
(73) Patentinhaber: Henkel Kommanditgesellschaft auf Aktien, 40191 Düsseldorf (DE)
(72) Erfinder: KRATZ, Gunther, D-4018 Langenfeld (DE); YÜKSEL, M., Levent, D-4000 Düsseldorf 13 (DE); BLUM, Stefan, D-4018 Langenfeld (DE)
(86) Internationale Anmeldenummer: EP9200566
(87) Internationale Veröffentlichungsnummer: WO9216283

(56) Entgegenhaltungen:
- WO-A-90/15028
- DE-A- 3 542 599
- DE-A- 3 709 174
- US-A- 4 976 751
- WORLD PATENT INDEX week 8219, Derwent Publications Ltd., London, GB; AN 82-38250E & JP,A,57 056 083 (TOA GOSEI CHEM IND LTD) 3 April 1982 see abstract

## Beschreibung

Die Erfindung betrifft ein Verfahren zum Reinigen von Abluft, die mit schwer wasserlöslichen, biologisch abbaubaren Verunreinigungen belastet ist, welche von einer Belebtschlamm und zumindest ein hochsiedendes Lösungsmittel für die Verunreinigungen enthaltenden Waschflüssigkeit absorbiert und durch den Belebtschlamm abgebaut werden, wobei Lösungsmittel und Belebtschlamm zumindest von einem Teil der restlichen Waschflüssigkeit getrennt werden, der abgeleitet wird.

Ein derartiges Verfahren ist aus der DE-A-36 41 442 bekannt. Die mit den Verunreinigungen belastete Abluft wird durch einen Absorptionsturm geführt, in welchem die Verunreinigungen von der Belebtschlamm und Lösungsmittel enthaltenden Waschflüssigkeit absorbiert werden. Die Waschflüssigkeit fließt anschließend in ein Belebtschlammbecken, wo die Verunreinigungen durch die Mikroorganismen des Belebtschlamms biologisch abgebaut werden. Um eine Aufsalzung und eine eventuelle Anreicherung der Waschflüssigkeit mit biologischen Hemmstoffen zu verhindern, wird ein Teil der Waschflüssigkeit kontinuierlich über eine Pumpe aus dem Waschflüssigkeits-Kreislauf abgezogen und einem Flotationsbehälter zugeführt. In diesem Behälter wird das hochsiedende Lösungsmittel mit dem Belebtschlamm aus der restlichen Waschflüssigkeit durch Flotation abgetrennt und in das Belebtschlammbecken zurückgeführt. Das geklärte Wasser wird der Kanalisation zugeleitet. In dem bekannten Verfahren werden als Lösungsmittel die Dialkylphthalate, insbesondere Dioctylphthalat und Dinonylphthalat eingesetzt.

Nachteilig bei dem bekannten Verfahren ist es, daß das mittels der Flotation abgetrennte geklärte Wasser einen relativ hohen Gehalt an Lösungsmittel und gegebenenfalls Belebtschlamm aufweist, wodurch eine Nachschaltung eines zusätzlichen Aufarbeitungsverfahrens oder eine aufwendige Entsorgung der abgetrennten Waschflüssigkeit erforderlich ist.

Der Erfindung liegt die Aufgabe zugrunde, das Verfahren der eingangs genannten Art derart weiterzuentwickeln, so daß der Gehalt der abzutrennenden Waschflüssigkeit an umwelt- und gesundheitsbedenklichen Substanzen erheblich reduziert wird, ohne daß wirtschaftlich aufwendige zusätzliche Maßnahmen ergriffen werden müssen.

Diese Aufgabe wird erfindungsgemäß dadurch gelöst, daß die Abtrennung des Teils der restlichen Waschflüssigkeit mittels Membranfiltration vorgenommen wird, wobei anorganische und hydrophilierte organische Membranen zum Einsatz kommen.

Durch den Einsatz von Silikonöl erreicht man einerseits eine ausgezeichnete Absorption der Verunreinigungen der Abluft in der Waschflüssigkeit. Andererseits ist Silikonöl physiologisch inert und daher weitgehend unbedenklich und kann erfindungsgemäß zusammen mit dem Belebtschlamm-Anteil mittels Membranfiltration aus der restlichen Waschflüssigkeit sehr gut abgetrennt werden. Mit dem erfindungsgemäßen Verfahren läßt sich der Restgehalt an Silikonöl in der abgetrennten Waschflüssigkeit auf ein Zwanzigstel und weniger als im bekannten Verfahren herabsetzen. Überraschenderweise wurde gefunden, daß sich auch bei längerem Betrieb die Abtrennung des Drei-Komponenten-Gemisches Silikonöl-Belebtschlamm-Waschflüssigkeit problemlos durchführen läßt, ohne daß die Membran verblockt, wenn anorganische oder hydrophilierte organische Membranen eingesetzt werden. Durch die erfindungsgemäße Weiterentwicklung des eingangs genannten Verfahrens erreicht man Gehalte an Lösungsmittel, die weit unter den entsprechenden gesetzlichen Grenzwerten liegen.

In einer Ausgestaltung des Verfahrens wird weiterhin vorgeschlagen, daß das Verfahren derart kontinuierlich betrieben wird, daß das Lösungsmittel und Belebtschlamm enthaltende Retentat zurückgeführt und die Menge des abgeleiteten Permeats durch frische Waschflüssigkeit (Wasser) ausgeglichen wird. Eine derartige Betriebsweise ist dem Dauerbetrieb einer Abluftreinigungsanlage angepaßt. Durch die niedrigen Gehalte an umweltbedenklichen Substanzen kann das abgeleitete Permeat ohne weiteres der Kanalisation zugeführt werden.

In manchen Fällen kann es erforderlich sein, den in dem erfindungsgemäßen Verfahren im Kreislauf geführten Belebtschlamm aus dem Kreislauf zu entnehmen, z.B. um ihn auszutauschen. Ein besonderer Vorteil des erfindungsgemäßen Verfahrens liegt in der Möglichkeit, das Gemisch aus Belebtschlamm, Lösungsmittel und restlicher Waschflüssigkeit außerordentlich stark einzudicken, so daß eine fast stichfeste Masse erhalten wird. Es wird also vorgeschlagen, daß das Verfahren diskontinuierlich zum Konzentrieren und insbesondere Eindicken des lösungsmittelhaltigen Belebtschlamms durchgeführt wird. Auch in diesem Fall bleiben die Gehalte an umweltbedenklichen Substanzen im Permeat gering. Als besonders geeignet in dem erfindungsgemäßen Verfahren hat es sich herausgestellt, wenn als Membranmaterial ein oberflächenhydrophiliertes Fluorpolymer eingesetzt wird. Hier besteht keine Gefahr, daß die Hydrophilie des Membranmaterials durch bestimmte Einflüsse verloren geht und die Effizienz des Verfahrens beeinträchtigt wird.

Als Membranen können Mikro-, Ultra- oder Nanofiltrationsmembranen eingesetzt werden. Besonders vorteilhaft im erfindungsgemäßen Verfahren ist die Anwendung der Querstrom-Membranfiltration.

Das erfindungsgemäße Verfahren kann ohne weiteres im Dauerbetrieb durchgeführt werden. Um für bestimmte Fälle jedoch eine besondere Sicherheitsreserve vorzusehen, wird vorgeschlagen, daß die Membran von Zeit zu Zeit mit einer Reinigungsflüssigkeit gespült wird. Dies kann dadurch geschehen, daß ein Behälter mit der Reinigungsflüssigkeit fest in der Anlage installiert wird und von Zeit zu Zeit der Fluß der Waschflüssigkeit durch die Membran bzw. an der Membran entlang unterbrochen und stattdessen die Membran mit der Reinigungsflüssigkeit beaufschlagt wird.

### Beispiele

Nachfolgend werden Ausführungsbeispiele anhand der einzigen Zeichnung näher beschrieben, welche ein schematisches Verfahrensfließbild darstellt.

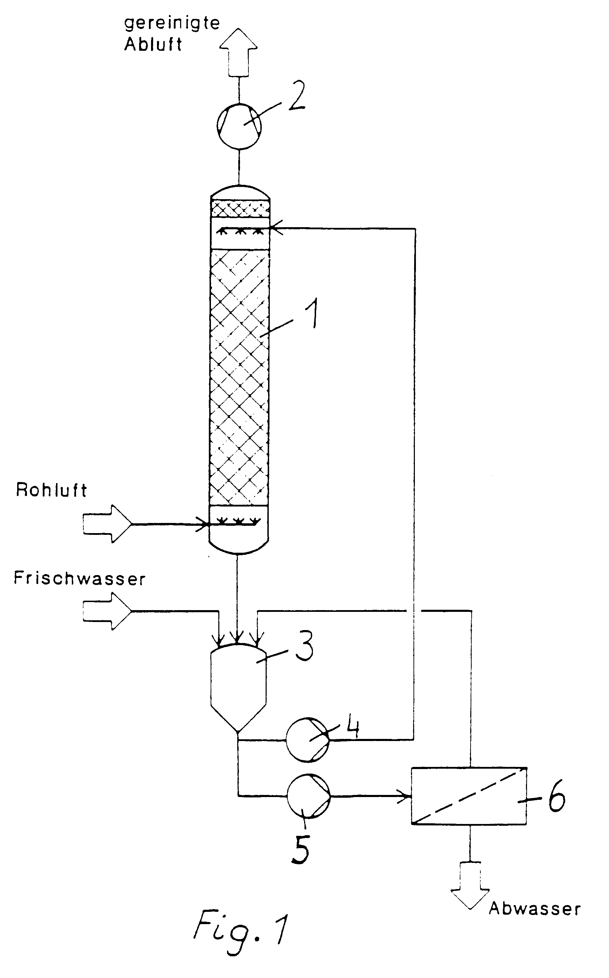

In Figur 1 ist dargestellt, daß die mit den schwer wasserlöslichen biologisch abbaubaren Verunreinigungen belastete Abluft unten in eine Absorptionskolonne 1 eintritt und von einem am Kopf der Kolonne angeordneten Ventilator 2 durch diese Kolonne 1 gesaugt und am Kolonnenkopf als gereinigte Abluft abgegeben wird. Im Gegenstrom, also vom Kopf zum Sumpf der Kolonne wird eine Belebtschlamm und Lösungsmittel-, also Silikonöl enthaltende Waschflüssigkeit mittels einer ersten Umwälzpumpe 4 der von unten nach oben strömenden Abluft entgegengeführt. Die Waschflüssigkeit fließt danach wieder zurück zum Belebungsbecken 3. Um die eingangs genannten Aufsalzungen und Anreicherungen mit biologischen Hemmstoffen zu vermeiden, wird mittels einer zweiten Umwälzpumpe 5 ein Teil der Flüssigkeit im Belebungsbecken abgezogen und über ein Membranmodul 6 wieder zum Belebungsbecken 3 zurückgeführt. Im Membranmodul 6 anfallendes Permeat wird als Abwasser abgeleitet. Zum Ausgleich des abgeleiteten Abwassers wird die entsprechende Menge von Frischwasser dem Belebungsbecken 3 zugeführt.

In Versuchen konnte nachgewiesen werden, daß sich durch den Einsatz geeigneter Membranen die Konzentration des hochsiedenden Lösungsmittels Silikonöl auf Werte von 50 mg/l bis 60 mg/l reduzieren läßt. Demgegenüber weist das Abwasser aus dem Flotationsbehälter Beladungen mit dem hochsiedenden Lösungsmittel von mehr als 1000 mg/l bis zu 1500 mg/l auf.

Weiteres Beispiel:
Eine Belebtschlammdispersion mit einem Silikonölgehalt von 20 % und einem Biomassegehalt von 20 g/l wurde als Einsatzmaterial für die Membranstufe verwendet. Es kam eine Ultrafiltrationsmembran DDSS Hekla 20 A zum Einsatz. Der konzentratseitige Druck lag bei maximal 3 bar, die Überströmungsgeschwindigkeit der Membran betrug 3 m/s. Die Temperatur lag zwischen 19 °C und 29 °C.

Die Membranstufe wurde in diesem Fall batchweise betrieben, d.h. das Konzentrat wurde wieder in den Einsatzvorlagebehälter zurückgeführt. Auf diese Weise erhöhte sich kontinuierlich die Viskosität und verringerte sich entsprechend der Wassergehalt des Einsatzmaterials.

Die Permeatflüsse nahmen dementsprechend von anfänglich 70 l/m² · h bis auf Werte von 20 l/m² · h ab. Das Konzentrat konnte nahezu bis auf die Einsatzbestandteile Silikonöl und Biomasse eingeengt werden. Mischproben aus dem gesamten angefallenen Permeat zeigten einen Gehalt von 4 mg/l bis 6 mg/l Silikonöl, bestimmt als petroletherlösliche Stoffe.

### Bezugszeichenliste

- 1: Absorptionskolonne
- 2: Ventilator
- 3: Belebungsbecken
- 4: erste Umwälzpumpe
- 5: zweite Umwälzpumpe
- 6: Membranmodul

## Patentansprüche

1. Verfahren zum Reinigen von Abluft, die mit schwer wasserlöslichen, biologisch abbaubaren Verunreinigungen belastet ist, welche von einer Belebtschlamm und zumindest ein hochsiedendes Lösungsmittel für die Verunreinigungen enthaltenden Waschflüssigkeit absorbiert und durch den Belebtschlamm abgebaut werden, wobei Lösungsmittel und Belebtschlamm zumindest von einem Teil der restlichen Waschflüssigkeit getrennt werden, der abgeleitet wird,
dadurch gekennzeichnet,
daß die Abtrennung des Teils der restlichen Waschflüssigkeit mittels Membranfiltration vorgenommen wird, wobei anorganische oder hydrophilierte organische Membranen zum Einsatz kommen.

2. Verfahren nach Anpruch 1, dadurch gekennzeichnet, daß als Lösungsmittel Silikonöl verwendet wird.

3. Verfahren nach Anpruch 1 oder 2,
dadurch gekennnzeichnet,
daß das Verfahren derart kontinuierlich betrieben wird, daß das Lösungsmittel und Belebtschlamm enthaltende Retentat zurückgeführt und die Menge des abgeleiteten Permeats durch frische Waschflüssigkeit ausgeglichen wird.

4. Verfahren nach Anspruch 1,
dadurch gekennzeichnet,
daß das Verfahren diskontinuierlich zum Konzentrieren und insbesondere Eindicken des lösungsmittelhaltigen Belebtschlamms durchgeführt wird.

5. Verfahren nach einem der Ansprüche 1 bis 4,
dadurch gekennzeichnet,
daß als Membranmaterial oberflächenhydrophiliertes Fluorpolymer eingesetzt wird.

6. Verfahren nach einem der Ansprüche 1 bis 5,
dadurch gekennzeichnet,
daß eine Querstromfiltration vorgenommen wird.

7. Verfahren nach einem der Ansprüche 1 bis 6,
dadurch gekennzeichnet,
daß die Membran von Zeit zu Zeit mit einer Reinigungsflüssigkeit gespült wird.

## Claims

1. A process for purifying waste air contaminated with substantially water-insoluble, biologically degradable pollutants which are adsorbed by a washing liquid containing activated sludge and at least one high-boiling solvent for the contaminants and which are degraded by the activated sludge, the solvent and the activated sludge being separated from at least part of the remaining washing liquid which is discharged, characterized in that the part of the remaining wash liquid is separated off by membrane filtration using inorganic and hydrophilicized organic membranes.

2. A process as claimed in claim 1, characterized in that silicone oil is used as the solvent.

3. A process as claimed in claim 1 or 2, characterized in that the process is carried out continuously by returning the retentate containing solvent and activated sludge and replacing the permeate removed by fresh washing liquid.

4. A process as claimed in claim 1 or 3, characterized in that the process is carried out discontinuously for concentrating and, in particular, thickening the solvent-containing activated sludge.

5. A process as claimed in any of claims 1 to 4, characterized in that surface-hydrophilicized fluoropolymer is used as the membrane material.

6. A process as claimed in any of claims 1 to 5, characterized in that crossflow filtration is carried out.

7. A process as claimed in any of claims 1 to 6, characterized in that the membrane is periodically washed with a cleaning liquid.

## Revendications

1. Procédé d'épuration d'air d'échappement, chargé d'impuretés difficilement solubles dans l'eau, biologiquement dégradables, qui sont absorbées par un liquide de lavage contenant une boue activée et au moins un solvant à point d'ébullition élevé pour les impuretés et sont dégradées par la boue activée, tandis que le solvant et la boue activée sont séparés au moins d'une partie du liquide résiduel, qui est évacuée, caractérisé en ce que la séparation de la partie du liquide de lavage est entreprise au moyen d'une filtration par membrane, dans laquelle on utilise des membranes minérales ou organiques hydrophilisées.

2. Procédé selon la revendication 1, caractérisé en ce que comme solvant, on utilise de l'huile de silicone.

3. Procédé selon les revendications 1 ou 2, caractérisé en ce que le procédé est réalisé en continu de manière que le rétentat contenant du solvant et de la boue activée est recyclé et que la quantité de perméat évacué se trouve compensée par du liquide de lavage frais.

4. Procédé selon la revendication 1, caractérisé en ce que le procédé est réalisé en discontinu pour concentrer et en particulier épaissir la boue activée contenant du solvant.

5. Procédé selon une des revendications 1 à 4, caractérisé en ce que comme matériau de la membrane on utilise du polymère fluoré à surface rendue hydrophile.

6. Procédé selon une des revendications 1 à 5, caractérisé en ce que on fait une filtration à courant transversal.

7. Procédé selon une des revendications 1 à 6, caractérisé en ce que on lave de temps en temps la membrane avec un liquide de nettoyage.
